# EUROPEAN PATENT APPLICATION

(11) **EP 2 028 652 A1**
(43) Date of publication of application: **25.02.2009**
(21) Application number: 08014846.3
(22) Date of filing: 21.08.2008
(51) Int. Cl.: G11B 5/855

(54) **Magnetic recording medium and production method thereof**

(30) Priority: 21.08.2007 JP 2007214474
(71) Applicant: Fujifilm Corporation, Tokyo 106-8620 (JP)
(72) Inventor: Nishikawa, Masakazu, Odawara-shi, Kanagawa (JP); Moriwaki, Kenichi, Odawara-shi, Kanagawa (JP)
(74) Representative: HOFFMANN EITLE

(57) **Abstract**

A method for producing a magnetic recording medium, including depositing an imprint resist layer on a magnetic layer containing a ferromagnetic material and a first non-magnetic material, on a substrate, transferring a concavo-convex pattern onto the imprint resist layer by pressing against the imprint resist layer an imprint mold structure having convex portions so as to have concavo-convex portions, forming magnetic pattern portions corresponding to the concavo-convex pattern by etching the magnetic layer using the imprint resist layer as a mask, and forming non-magnetic pattern portions by embedding a second non-magnetic material in concave portions, wherein the magnetic layer is etched so as to remove the ferromagnetic material in the magnetic layer, and leave 5% by mass or more of the first non-magnetic material in each concave portion relative to the total mass of the first non-magnetic material in each region corresponding to the concave portions to be formed.

## Description

### BACKGROUND OF THE INVENTION

### Field of the Invention

The present invention relates to a method for producing a magnetic recording medium using an imprint mold structure, and a magnetic recording medium produced by the method.

### Description of the Related Art

In recent years, hard disk drives that are superior in high-speed reading and writing process and low in costs have begun being incorporated in portable devices such as cellular phones, compact acoustic devices and video cameras as major storage devices. According to increase of the share of hard disk drives as recording devices incorporated in portable devices, a technique for increasing recording density has been required to meet the demand for further sizing down and increasing capacity. In order to increase the recording density of hard disk drives, a method of narrowing spaces between data tracks and a method of narrowing the magnetic head width in magnetic recording media have been conventionally used; however, as spaces between data tracks are made narrow, effects of magnetic material between adjacent tracks (crosstalk) and effects of heat fluctuation become noticeable, and recording density is limited. On the other hand, there is a limitation on improvement in surface recording density by narrowing of magnetic head width.

Accordingly, magnetic recording media in a form of so-called discrete track media have been proposed as a solution to noise caused by crosstalk (refer to Japanese Patent Application Laid-Open (JP-A) Nos. 56-119934 and 02-201730). In discrete track media, magnetic interference between adjacent tracks is decreased by means of discrete structures in which non-magnetic guard band regions are provided between adjacent tracks so as to magnetically separate tracks from one another.

Also, magnetic recording media in a form of so-called bit patterned media, in which bits for recording signals are provided in predetermined-shaped patterns have been proposed as a solution to demagnetization caused by heat fluctuation (refer to JP-A No. 03-22211).

The discrete track media and the bit patterned media are produced using an imprinting method (imprinting process) in which a desired pattern is transferred onto a resist layer formed on a surface of a magnetic recording medium by using a mold for forming a resist pattern (also referred to as "mold"), as disclosed in JP-A No. 2004-221465.

Specifically, the imprinting method is a method for obtaining a desired magnetic recording medium, in which a thermoplastic resin or photocurable resin (imprint resist) is applied over a substrate to be processed, and a mold which has been processed to have a desired shape is contacted with the coated resin, pressed so that the resin is cured by heating (cooled after forming a pattern), or irradiating with light, and then the mold is separated to form a pattern which corresponds to the pattern formed on the mold and serves as a mask, and the substrate is subjected to patterning with the mask by dry etching or wet etching, thereby yielding a desired magnetic recording medium.

Specifically, the magnetic layer deposited over a substrate surface is etched with a mask having a concavo-convex pattern, which is formed in the resist over the substrate in a transfer step by imprint lithography, so as to form a concavo-convex pattern on the substrate surface, in which the magnetic material constituting convex portions, and a non-magnetic material is embedded in concave portions to form a configuration in which the magnetic material is separated therefrom.

However, in a step of etching the magnetic layer, the bottom faces (the boundary between the substrate and the magnetic layer) and sidewall surfaces of the concave portions formed between the convex portions formed of the magnetic material left on the substrate of the magnetic recording medium are trimmed to be planarized, thereby decreasing the adhesion of the non-magnetic material embedded in the concave portions to the bottom faces and sidewall surfaces. Therefore, there has been a possibility that the non-magnetic material is delaminated from the concave portions.

Additionally, minute cracks or gaps exist between the unprocessed portions (convex portions) of the magnetic layer and the non-magnetic layer (concave portions). When a magnetic recording medium is used for a long period of time, the moisture penetration and chemical contamination occur in the cracks, thereby causing corrosion of the unprocessed portions (convex portions) in the magnetic layer. When corrosion occurs, protrusions are generated on the surface of the magnetic recording medium. When a magnetic head is contacted with the corroded portion, it is damaged and does not function as a drive, resulting in a crucial state.

Therefore, it has been desired to provide a method for producing a magnetic recording medium in which a non-magnetic material embedded in concave portions formed by etching a magnetic layer deposited on a substrate of the magnetic recording medium is rarely delaminated, and the magnetic layer can be prevented from corrosion caused by patterning of the magnetic layer, and a magnetic recording medium produced by the method.

### BRIEF SUMMARY OF THE INVENTION

The present invention is carried out in view of such present state of the art, and aims to solve the problems in related art and to achieve the following object. Namely, an object of the present invention is to provide a method for producing a magnetic recording medium, in which a non-magnetic material embedded in concave portions formed by etching a magnetic layer is not easily delaminated, and the magnetic layer can be prevented from corrosion caused by patterning the magnetic layer, and a magnetic recording medium produced by the method.

Means for solving the above-described problems are described below.
<1> A method for producing a magnetic recording medium, containing depositing an imprint resist layer on a magnetic layer which is deposited on a substrate and contains a ferromagnetic material and a first non-magnetic material, transferring a concavo-convex pattern onto the imprint resist layer by pressing against the imprint resist layer an imprint mold structure in which a plurality of convex portions are arranged on a disc-shaped base so as to have concavo-convex portions corresponding to the concavo-convex pattern, forming magnetic pattern portions corresponding to the concavo-convex pattern by etching the magnetic layer using the imprint resist layer as a mask, and forming non-magnetic pattern portions by embedding a second non-magnetic material in concave portions which are regions other than the magnetic pattern portions formed in the magnetic layer, wherein the magnetic layer is etched so as to remove the ferromagnetic material contained in the magnetic layer, and leave 5% by mass or more of the first non-magnetic material in each of the concave portions relative to the total mass of the first non-magnetic material contained in each of the regions corresponding to the concave portions to be formed.
<2> The method for producing a magnetic recording medium according to <1>, wherein the magnetic pattern portions have a granular structure in which crystal particles exhibiting ferromagnetism are defined by the first non-magnetic material.
<3> The method for producing a magnetic recording medium according to any one of <1> and <2>, wherein the magnetic layer is etched in such a manner that the first non-magnetic material is left in the concave portions so as to be eccentrically located near the magnetic pattern portions.
<4> The method for producing a magnetic recording medium according to <3>, wherein the amount of the first non-magnetic material left in each of the concave portions is 5% by mass or more relative to the total mass of the first non-magnetic material contained in each of the regions corresponding to the concave portions to be formed.
<5> The method for producing a magnetic recording medium according to any one of <1> to <4>, wherein the first non-magnetic material is etched so as to remain on a wall of the concave portions.
<6> The method for producing a magnetic recording medium according to any one of <1> to <5>, wherein each of the first non-magnetic material and the second non-magnetic material contains any of Pt, Si and Ti.
<7> The method for producing a magnetic recording medium according to any one of <1> to <6>, wherein each of the first non-magnetic material and the second non-magnetic material contains an oxide of any of Pt, Si and Ti.
<8> A magnetic recording medium produced by the method for producing a magnetic recording medium according to any one of <1> to <7>.

The present invention can provide a method for producing a magnetic recording medium, in which a non-magnetic material embedded in concave portions formed by etching a magnetic layer is not easily delaminated and the magnetic layer can be prevented from corrosion, and a magnetic recording medium produced by the method.

### BRIEF DESCRIPTION OF THE SEVERAL VIEWS OF THE DRAWINGS

FIG. 1 is a perspective view showing an example of a schematic configuration of an imprint mold structure used in the present invention.
FIG. 2 is a cross sectional view taken along a line A-A in FIG. 1.
FIG. 3A is a cross sectional view showing an example of a method for producing an imprint mold structure used in the present invention.
FIG. 3B is another cross sectional view showing an example of a method for producing an imprint mold structure used in the present invention.
FIG. 4 is a cross-sectional view showing an example of a method for producing a magnetic recording medium by using an imprint mold structure used in the present invention.
FIG. 5 shows a configuration of a magnetic layer (a plane TEM image) in a method for producing a magnetic recording medium of the present invention.
FIG. 6 is a cross sectional view showing an example of a configuration of a magnetic recording medium of the present invention.

### DETAILED DESCRIPTION OF THE INVENTION

Hereinafter, a method for producing a magnetic recording medium and a magnetic recording medium of the present invention will be explained with reference to the drawings.

### <Imprint Mold Structure>

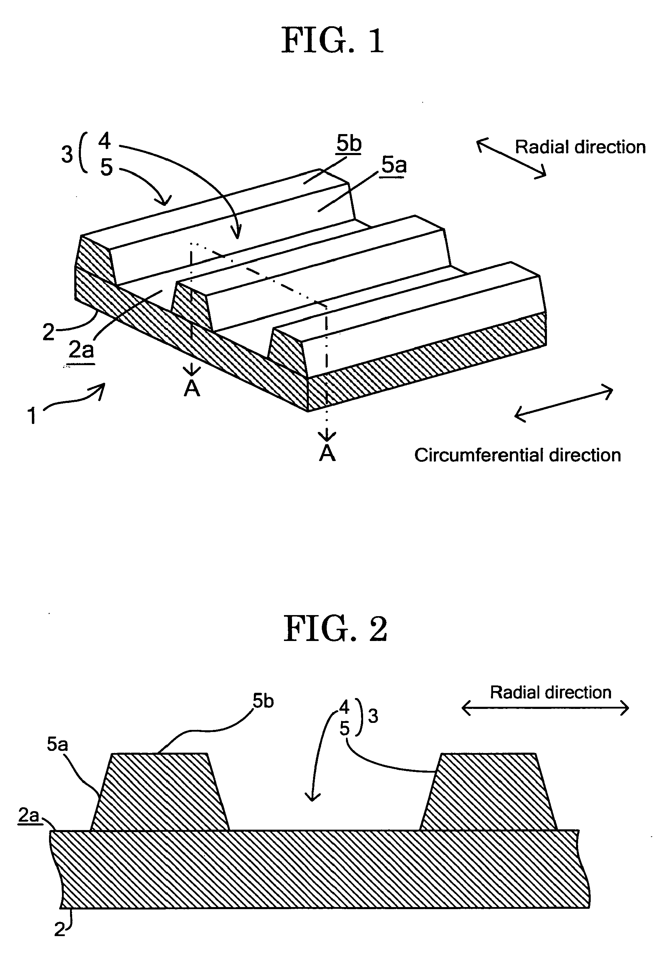

FIG. 1 is a perspective view showing an example of a schematic configuration of an imprint mold structure used for a method for producing a magnetic recording medium of the present invention. FIG. 2 is a cross sectional view taken along a line A-A in FIG. 1.

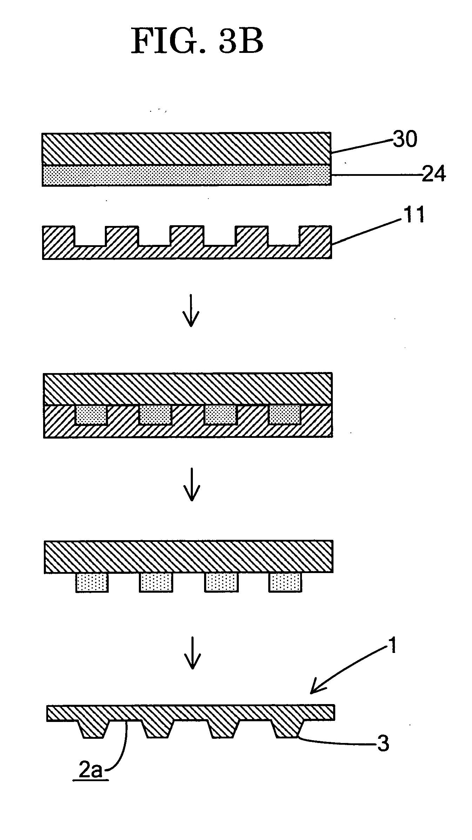

As shown in FIG. 1, an imprint mold structure 1 is pressed against an object to be processed (for example, an imprint resist 24 in FIG. 3B, which will be explained later), and contains at least a base 2 having a disc shape, concavo-convex portions 3 formed by arranging a plurality of convex portions 5 at certain intervals on a surface 2a of the base 2, thereby forming concave portions 4, and further contains other components as necessary.

It is preferred that the concavo-convex portions 3 be formed of concavo-convex portions for data pattern, in which convex portions are concentrically arranged, and concavo-convex portions for servo pattern, in which convex portions are radially arranged, and a plurality of areas of the concavo-convex portions for servo pattern are formed at substantially even intervals in a circumferential direction so as to divide area of the concavo-convex portions for data pattern (not shown).

Here, the cross-sectional shape of the convex portions in a plane perpendicular to the direction where the concavo-convex portions 3 is arranged is preferably substantially a trapezoidal shape having a cross-sectional size decreasing with distance from the surface 2a to its top, as shown in FIG. 2.

Hereinafter, in the present embodiment, the term "cross-section (or cross-sectional shape)" denotes a cross-section (or cross-sectional shape) in a circumferential direction (in a plane perpendicular to the direction where the concavo-convex portions 3 are arranged) of the base 2, unless otherwise indicated.

### -Other Components -

The other components are not particularly limited and may be suitably selected according to the purpose, as long as the effect of the present invention is not adversely affected. For example, a mold surface layer deposited over the base 2 in the form of laminate and having delamination properties relative to the imprint resist layer, is used.

### «Imprint Resist Layer»

An imprint resist layer 24 is a layer deposited by applying an imprint resist composition (hereinafter also referred to as an imprint resist solution) containing at least any one of a thermoplastic resin and a photocurable resin over a substrate of a magnetic recording medium.

The imprint resist layer 24 has a thickness of preferably 20 nm to 300 nm, and more preferably 50 nm to 100 nm.

The imprint resist layer can be deposited by spin coating, spray coating, dip coating or the like. The spin coating is preferably used because the magnetic recording medium is doughnut-shaped.

The thickness of the imprint resist layer 24 is measured, for example, using Ellipsometer DHA-FX (by MIZOJIRI OPTICAL CO., LTD.).

Examples of imprint resist compositions include novolac resins, epoxy resins, acrylic resins, inorganic silicone resins and organic silicone resins.

As a novolac resin, for example, mr-I 7000E (by Microresist Technology) may be used.

As an epoxy resin, for example, SU-8-2 (by Kayaku Microchem Co., Ltd.) may be used.

### <Method for Producing Imprint Mold Structure>

Hereinafter, a method for producing an imprint mold structure used in the present invention will be explained with reference to the drawings. The imprint mold structure used in the present invention may be produced by any of other production methods other than the following method.

### -Production of Original Master-

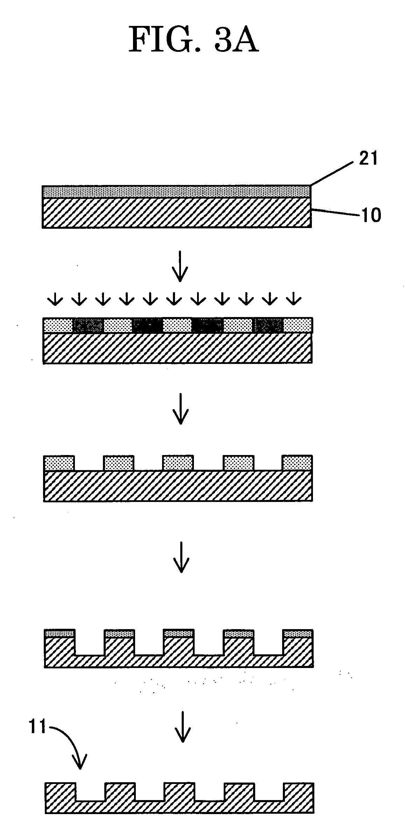

FIGS 3A to 3B show methods for producing an imprint mold structure.

As shown in FIG. 3A, first, an electron beam resist solution is applied onto an Si base 10 by a spin coater to deposit a photoresist layer 21 having a thickness of 100 nm (photoresist layer forming step).

And then, while the Si base 10 is rotated, a laser beam (or an electron beam) modulated correspondingly to a servo signal is applied onto the Si base 10 (image forming step).

The entire surface of the photoresist is exposed to the electron beam such that a region corresponding to each frame on the circumference of the Si base is exposed to form a desired pattern, for example, a pattern corresponding to a servo signal (servo pattern) that linearly extends in a radius direction of each track from the rotational center of the Si base (an exposing step).

Subsequently, the photoresist layer 21 is subjected to a developing process to remove exposed portions, and then selective etching is carried out by RIE (reactive ion etching) or the like using the pattern of the photoresist layer 21 after removal of the exposed portions as a mask, thereby yielding a original master 11 having a concavo-convex shape.

Examples of methods for producing a mold using the original master 11 include plating and nanoimprinting.

The method for producing a mold by plating is as follows:
First, a conductive layer is deposited on a surface of the original master 11.
As a method for depositing the conductive layer, generally, vacuum film deposition methods such as sputtering and vapor deposition; and electroless deposition and the like may be used.
As a material for the conductive layer, metal or an alloy, which contains at least one element selected from Ni, Cr, W, Ta, Fe and Co, may be used. Ni, Co, and an FeCo alloy are preferred. Additionally, a non-metal material such as TiO exhibiting conductivity may also be used for the conductive layer.
The conductive layer has a thickness of preferably 5 nm to 30 nm, and more preferably 10 nm to 25 nm.
On the original master having the conductive layer deposited thereon, a metal or alloy material is laminated by plating so as to have a certain thickness, and then a plated substrate is removed from the original master 11 so as to form a mold.
Here, as a plating material for forming the mold, Ni, Cr, an FeCo alloy and the like may be used, and Ni is particularly preferred.
The thickness of the mold 1 after removal of the plated substrate is preferably 50 µm to 300 µm, and more preferably 75 µm to 175 µm.

Alternatively, a mold may be produced using the aforementioned mold as the original master 11 by nanoimprinting.

A method for reproducing a mold by nanoimprinting is as follows:

### -Transfer Step-

As shown in FIG. 3B, an imprint resist layer 24 is deposited over one surface of a substrate to be processed 30 by applying an imprint resist solution containing a photocurable resin, and then a original master 11 is pressed against the imprint resist layer 24, thereby transferring a concavo-convex pattern formed on the original master 11 to the imprint resist layer 24.

Here, a material for the substrate to be processed 30 is not particularly limited and may be suitably selected according to the purpose, as long as it transmits light and has strength enough to function as an imprint mold structure 1. Examples thereof include quartz (SiO₂).

The expression "transmits light" specifically means that an imprint resist solution is sufficiently cured when light is applied in such a manner as to enter one surface of the substrate to be processed 30 and exit from the other surface thereof covered with the imprint resist layer, and that the light transmittance from the one surface to the other surface is 50% or more at wavelengths of 200 nm or more.

The expression "has strength enough to function as an imprint mold structure 1" specifically means that such strength as enables the material to be separable and to withstand the pressurization when the original master is pressed against the imprint resist layer deposited over the substrate of the magnetic recording medium at 4kgf/cm² as average surface pressure.

### --Curing Step--

After the transfer step, the transferred pattern is cured by cooling the imprint resist layer 24 or irradiating the imprint resist layer 24 with an electron beam, ultraviolet ray or the like. When curing is carried out using an electron beam, ultraviolet ray or the like, the substrate to be processed 30 is delaminated from the imprint mold structure 1 after patterning, and then the pattern may be cured by irradiating with an electron beam, an ultraviolet ray or the like.

### -Pattern Forming Step-

Subsequently, selective etching is carried out by RIE or the like, using as a mask the transferred concavo-convex pattern, to yield the mold structure 1 having a concavo-convex shape as shown in FIG. 1.

Alternatively, an inorganic material is formed on the surface of the base so as to form an inorganic material mask using the cooled imprint resist layer as a mask, and then the base is etched using the inorganic material mask to form an imprint mold structure 1.

### (Magnetic Recording Medium)

Hereinafter, a method for producing a magnetic recording medium of the present invention will be explained with reference to the drawings. Examples of the magnetic recording media include discrete track media and patterned media. The magnetic recording medium of the present invention is preferably produced using the imprint mold structure, but it may be produced by other production method.

### [Transfer Step]

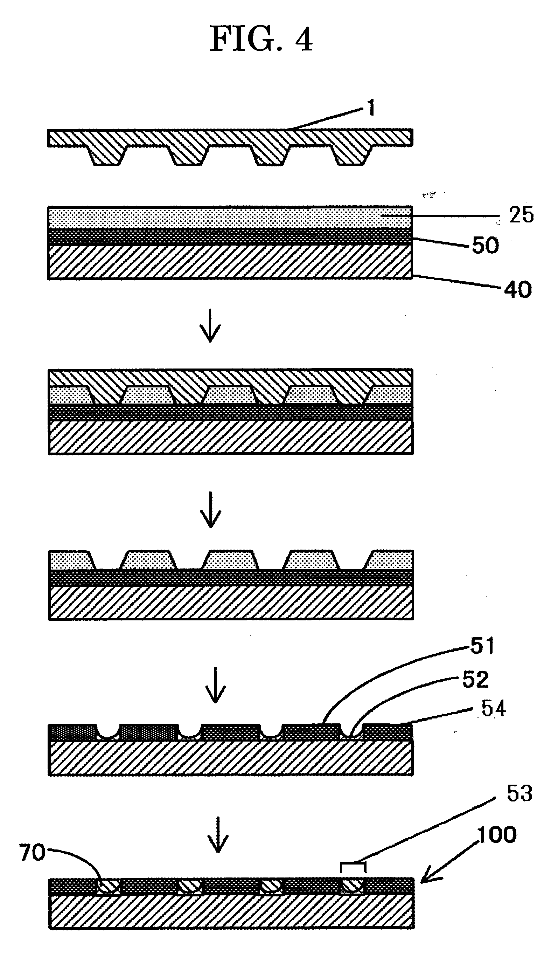

As shown in FIG. 4, a mold structure 1 is pressed against a magnetic recording medium, in which a magnetic layer 50 and an imprint resist layer 25 deposited on the magnetic layer 50 by applying an imprint resist solution are deposited over a substrate 40, and then pressure is applied to the recording medium so as to transfer the concavo-convex pattern 3 formed on the mold structure 1 onto the imprint resist layer 25.

### «Imprint Resist Layer»

In the production of the magnetic recording medium, the imprint resist layer 25, for example, is deposited by applying an imprint resist composition (hereinafter also referred to as "imprint resist solution") containing at least any one of a thermoplastic resin and photocurable resin over a substrate of a magnetic recording medium.

For the imprint resist layer 25, the same imprint resist composition as that for the imprint resist layer 24 in the production of an imprint mold structure may be used, as long as the transfer accuracy is not impaired in a transfer step in the production of a magnetic recording medium.

Hereinafter, unless otherwise indicated, an imprint resist layer and an imprint resist composition respectively indicate the imprint resist layer 25 and the imprint resist composition for forming the imprint resist layer 25, in the production of a magnetic recording medium.

The imprint resist layer 25 has a thickness of preferably 20 nm to 300 nm, and more preferably 50 nm to 100 nm.

The imprint resist layer 25 can be deposited by spin coating, spray coating, dip coating or the like. The spin coating is preferably used because the magnetic recording medium is doughnut-shaped.

The thickness of the imprint resist layer 25 is measured, for example, using Ellipsometer DHA-FX (by MIZOJIRI OPTICAL CO., LTD.).

### - Magnetic Layer -

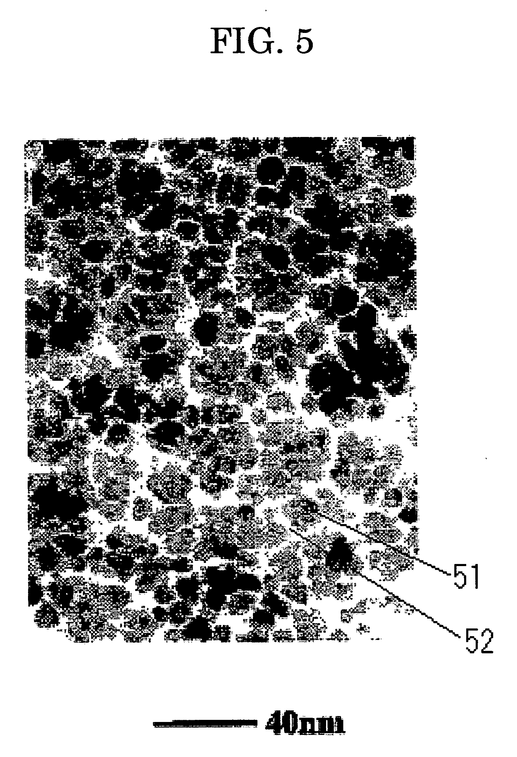

A magnetic layer 50 preferably contains at least a ferromagnetic material 51 and a first non-magnetic material 52, and more preferably a ferromagnetic material 51 consisting of crystal particles has a granular structure defined by the first non-magnetic material 52 as shown in FIG. 5.

The granular structure is disclosed in Japanese Patent Application Laid-Open (JP-A) No. 2005-353140, and in this embodiment of the present invention a magnetic layer having such a granular structure is also preferably used.

Moreover, the first non-magnetic material 52 preferably contains at least Pt, Si and Ti, more preferably contains at least PtO, SiO₂ and TiO, and particularly preferably contains PtO.

Furthermore, the ferromagnetic material 51 particularly preferably contains a CoCr alloy.

### [Magnetic Pattern Portion Forming Step]

A concavo-convex shape is formed in a magnetic layer 50 on the basis of a pattern formed in a mold structure 1 by etching the magnetic layer 50 using as a mask the imprint resist layer 25, on which the pattern of concavo-convex portions 3 have been transferred. As a result, the remaining convex-shaped portions are magnetic pattern portions 54.

### - Etching Step -

An etching step of the present invention may be carried out as follows:
As an etching method, any of dry etching and wet etching can be used.
Examples of dry etchings include ion beam etching and reactive ion etching (RIE).
In an ion beam etching, Ar is preferably used as a process gas.
In a reactive ion etching, Co + NH₃, or a chlorine gas is preferably used.
In wet etchings, electrolytic etching and electroless etching can be used, and electrolytic etching is particularly preferred.
An electric field is preferably applied by a pulse signal.
As an etchant used in a wet etching, a ferric chloride aqueous solution, nitric acid and the like can be used.
In a wet etching step, the magnetic layer is wet etched using the imprint resist layer 25 as a mask so as to form regions to be etched (processed portions) and magnetic pattern portions (unprocessed portions). The amount of the first non-magnetic material left in each of the regions etched (processed portions) is 5% by mass or more, and particularly preferably 10% by mass to 40% by mass, relative to the amount of the first non-magnetic material in each of the the magnetic pattern portions (unprocessed portions) per unit volume.

Moreover, it is preferred that the etching be carried out to leave the first non-magnetic material in a boundary between each of the processed portions (concave portions) and each of the magnetic pattern portions (convex portions).

As a method for changing the amount of the first non-magnetic material in the boundary between each of the processed portions and each of the magnetic pattern portions in the magnetic layer, a method of changing an incident angle of beam in a dray etching, or ion beam etching is preferably used. Particularly, in RIE a bias voltage applied to the substrate may be changed. In a wet etching, the pulse width and the amplitude of the electric field pulse during etching may be changed.

Namely, the etching is carried out so that the amount of the first non-magnetic material in the boundary between each of the processed portions and each of the magnetic pattern portions in the magnetic layer relative to the amount of the first non-magnetic material in each of the magnetic pattern portions in the magnetic layer per unit volume is preferably 5% by mass or more, and more preferably 10% by mass to 40% by mass. Namely, the etching is preferably carried out so that the amount of the first non-magnetic material left in each of the processed portions (concave portions) relative to the amount of the first non-magnetic material that has been contained in each of the regions corresponding to the concave portions, i.e. the regions that have not yet been processed, is preferably 5% by mass or more.

The residual state of the first non-magnetic material in the boundary between each of the processed portions and each of the magnetic pattern portions is measured by carrying out a spectral analysis and mapping of the processed portions and magnetic pattern portions in the magnetic layer by means of TOF-SIMS using micro-auger electron spectrometer, TRIFT IV, PHI700 (manufactured by ULVAC-PHI, Inc.).

It is preferable to find the ratio of the processed portions of the magnetic layer to the magnetic pattern portions of the magnetic layer in the spectral intensity showing the characteristics of the first non-magnetic material.

Moreover, the amount of the first non-magnetic material in each of the processed portions per unit volume is defined as "a relative amount to the amount of the first non-magnetic material in each of the magnetic pattern portions per unit volume."

Here, "unit volume" is a volume which is calculated from an area (for example, a 1 µm-square area) for measuring the amount of the first non-magnetic material by a micro-auger electron spectrometer, in which each of the areas has "the same surface area (or unit area)", and a depth (several nanometers to several tens of nanometers) from the surface of an object to be measured by a detection beam of the spectrometer. That is, the amount of the first non-magnetic material exposed per unit area in the processed portions is preferably 5% by mass or more relative to the amount of the first non-magnetic material in the magnetic pattern portions per unit area.

### [Non-Magnetic Pattern Portion Forming Step]

Thereafter, a second non-magnetic material 70 is embedded in the concave portions in the concavo-convex pattern formed in the magnetic layer 50 in the magnetic pattern portion forming step, and then surfaces, specifically an exposed surface of the magnetic pattern portions 51 having the convex portions, and an exposed surface of the non-magnetic pattern portions 53, which is formed by embedding the second non-magnetic material 70, are planarized, and then a protective film is deposited on the surface as necessary, thereby yielding a magnetic recording medium 100.

The second non-magnetic material 70 preferably contains at least Pt, Si and Ti, and more preferably contains at least PtO, SiO₂ and TiO. Then, the second non-magnetic material 70 and the first non-magnetic material 52 are preferably the same material. As a result, the non-magnetic material 70 has higher affinity to the processed portions containing the first non-magnetic material 52, in addition to the anchor effect, and thus the adhesion of the second non-magnetic material to the processed portions becomes stronger.

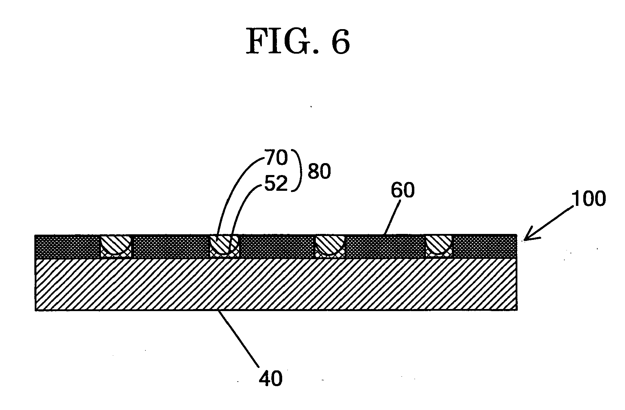

FIG. 6 is a cross sectional view showing an example of a configuration of a magnetic recording medium of the present invention yielded as described above. The cross sectional view shows a cross section of the magnetic recording medium in a radial direction.

As shown in FIG. 6, the magnetic recording medium of the present invention consists of magnetic pattern portions 60 which are formed on a substrate 40 at predetermined intervals, and non-magnetic pattern portions 80 formed between the magnetic pattern portions 60.

The non-magnetic pattern portions 80 contain a first non-magnetic material 52 which is also contained in the magnetic patterns 60 formed by wet etching the magnetic layer 50 (not shown), and a second non-magnetic material 70. The average amount ratio of the first non-magnetic material 52 in each of the non-magnetic pattern portions 80 is preferably 5% by mass or more relative to the first non-magnetic material in each of the unprocessed portions.

### Examples

Hereinafter, Examples of the present invention will be described, which however shall not be construed as limiting the scope of the present invention.

### Example 1

### <Preparation of Imprint Mold Structure>

### (a) Preparation of Original Master

An electron beam resist was applied by spin coating on a disc-shaped Si base having a diameter of 8 inch so as to have a thickness of 100 nm.

A desired pattern was exposed using a rotary electron beam exposer, and then subjected to development to yield an electron beam resist having a concavo-convex pattern on the Si base.

Subsequently, the Si base was subjected to reactive ion etching (RIE) using the electron beam resist pattern as a mask so as to provide a concavo-convex pattern on the Si base.

Thereafter, the residual resist was washed out with a solvent capable of dissolving it, and then the Si base was dried to yield an original master.

Here, the concavo-convex patterns were broadly classified into those in a data area and those in a servo area.

The data area was formed of a concavo-convex pattern in which each of the convex portions had a width of 200 nm and each of the concave portions had a width of 200 nm (Track Pitch of 400nm). The servo area had a reference signal length of 80 nm and the total sector number of 120 and was formed of a pattern of a preamble area (40 bit); a servo mark area (6 bit); a sector code area (8 bit) and a cylinder code area (32 bit); and a burst area.

The servo mark area employed the number "001010". The concavo-convex pattern in the sector code area was formed by binary conversion. The concavo-convex pattern in the cylinder code area was formed by gray conversion and then formed by Manchester conversion.

Moreover, the concavo-convex pattern in the burst area was typical 4-burst pattern (16 bits each).

### (b) Preparation of Imprint Mold Structure by Plating

An Ni conductive film having a thickness of 20 nm was deposited on the original master by sputtering.

The original master having the Ni conductive film was immersed in a nickel sulfamate solution to deposit an Ni layer having a thickness of 200 µm by electroplating, and the Ni layer was delaminated from the Si original master, and then the Si original master was washed to yield an imprint mold structure 1.

### <Production of Magnetic Recording Medium>

A soft magnetic layer, a first non-magnetic orientation layer, a second non-magnetic orientation layer, a magnetic layer (also referred to as a magnetic recording layer), a protective layer and a lubricant layer were deposited in this order over a glass substrate having a thickness of 2.5 inch to produce a magnetic recording medium.

The soft magnetic layer, the first non-magnetic orientation layer, the second non-magnetic orientation layer, the magnetic recording layer and the protective layer were deposited by sputtering, and the lubricant layer was deposited by dipping.

### <Deposition of Soft Magnetic Layer>

As the soft magnetic layer, a layer consisting of CoZrNb and having a thickness of 100 nm was deposited.

Specifically, the glass substrate was placed facing the CoZrNb target, then Ar gas was injected such that its pressure became 0.6 Pa, thereby depositing the soft magnetic layer at DC 1,500 W.

### <Deposition of First Non-magnetic Orientation Layer>

As the first non-magnetic orientation layer, a Ti layer having a thickness of 5nm was deposited.

Specifically, the soft magnetic layer deposited over the substrate was placed facing a Ti target, and then Ar gas was injected such that its pressure became 0.5 Pa, and a Ti seed layer having a thickness of 5 nm was deposited by discharging at DC 1,000 W, thereby depositing the first non-magnetic orientation layer.

### <Second Non-magnetic Orientation Layer>

Subsequently, as the second non-magnetic orientation layer, an Ru layer having a thickness of 6 nm was deposited.

The first non-magnetic orientation layer deposited over the substrate was placed facing an Ru target, and then Ar gas was injected such that its pressure became 0.8 Pa, and the Ru layer having a thickness of 6 nm was deposited by discharging at DC 900 W, thereby depositing the second non-magnetic orientation layer.

### <Deposition of Magnetic Recording Layer>

Subsequently, as the magnetic recording layer, a CoCrPtO layer having a thickness of 18 nm was deposited.

Specifically, the second non-magnetic orientation layer deposited over the substrate was placed facing a CoPtCr target, and then Ar gas containing 0.06% of O₂ was injected such that its pressure became 14Pa, and then the magnetic recording layer was deposited by discharging at DC 290W.

### <Deposition of Protective Layer>

Finally, the magnetic recording layer deposited over the substrate was placed facing a C target, and then Ar gas was injected such that its pressure became 0.5 Pa, and then a C protective layer having a thickness of 4 nm was deposited by discharging at DC 1,000 W.

The coercive force of the magnetic recording medium was 334 kA/m (4.2kOe).

In this embodiment, the first non-magnetic material of the magnetic recording medium was PtO.

### <Deposition of Imprint Resist Layer>

Over the protective layer, a novolac resist, mr-I 7000E (by Microresist Technology) was spin coated at 3,600 rpm so as to have a thickness of 100 nm, thereby depositing a first imprint resist layer.

### <Transfer Step>

The surface having the concavo-convex portions in the mold structure was placed facing the surface of the substrate over which the imprint resist layer was deposited, and the substrate was heated to 110°C, and then the mold structure was contacted with the imprint resist layer by pressing at 1.5MPa for 30 seconds.

After the above steps were completed, the mold structure was delaminated from the substrate having the imprint resist layer.

Subsequently, when a concavo-convex pattern was formed in the imprint resist layer by transferring a concavo-convex pattern based on the concavo-convex portions of the mold structure to the imprint resist layer, the imprint resist layer remained in concave portions. The residual imprint resist layer was removed by O₂ reactive chemical etching. The O₂ reactive chemical etching was carried out to expose the magnetic layer in the surfaces of the concave portions.

### <Magnetic Pattern Portion Forming Step>

After the residual imprint resist layer was removed from the concave portions, the magnetic layer was processed to have a concavo-convex pattern.

To process the magnetic layer, an ion beam etching method was used.

Specifically, using Ar gas at an ion acceleration energy of 500 eV, an ion beam was injected vertically to the magnetic layer.

After the magnetic layer was processed as described above, the residual resist on the magnetic layer (unprocessed portions) was removed by O₂ reactive chemical etching.

### <Non-Magnetic Pattern Portion Depositing Step (Second Non-Magnetic Material-Containing Layer Depositing Step)>

After the magnetic layer was processed, an SiO₂ layer was deposited by sputtering as a layer containing a second non-magnetic material, so as to have a thickness of 50 nm from the surface of the magnetic layer, and then the SiO₂ layer was removed by ion beam etching in such a manner that the magnetic layer and the non-magnetic layer constituted one surface.

### <Evaluation of Magnetic Recording Medium>

### «Measurement of Residual Amount of First Non-Magnetic Material»

The residual amount of the first non-magnetic material in an intermediate of the magnetic recording medium, in which the magnetic layer had been processed, was evaluated by the following method.

A spectral analysis of the processed portions and magnetic pattern portions in the magnetic layer was carried out by a micro-auger electron spectrometer, PHI700 (manufactured by ULVAC-PHI, Inc.) to measure the residual amount. The average amount of the first non-magnetic material was obtained in such a manner that 0.2 µm-square areas were selected from a 1 µm-square measurement area (height: 1 µm and width: 1 µm) and the amount of the first non-magnetic material in each of the 0.2 µm-square areas was measured. Based on the measurement results, the ratio of the amount of the first non-magnetic material left in each of the processed portions (concave portions) to the amount of the first non-magnetic material that had been contained in each of the regions corresponding to the concave portions, i.e. the regions that had not yet been processed, was calculated.

### (a) Measurement of Residual Amount of First Non-Magnetic Material in Processed Portion in Magnetic Layer

The total residual amount was measured by detecting a spectral intensity showing the characteristic of an element derived from a first non-magnetic material in a measurement area (1 µm-square area) each in the processed portions and magnetic pattern portions of the magnetic layer.

When the first non-magnetic material was SiO₂, Si and O were detected; when the first non-magnetic material was TiO, TiO and O were detected; and when the first non-magnetic material was PtO, Pt and O were detected.

When a spectral intensity showing the characteristic of an element derived from the first non-magnetic material in a processed portion (0.2 µm-square area) was defined as "I(E)", and a spectral intensity showing the characteristic of an element derived from the first non-magnetic material in a magnetic pattern portion (0.2 µm-square area) was defined as "I(UE)", the ratio of I(E) to I(UE) was evaluated on the basis of the following evaluation criteria. In the following evaluation criteria, "A" and "B" were in the allowable range.

### [Evaluation Criteria]

A: I(E)/I(UE): 20% by mass or more
B: I(E)/I(UE): 5% by mass or more to less than 20% by mass
C: I(E)/I(UE): less than 5% by mass

### (b) Measurement of Residual Amount of Non-Magnetic Material in Boundary between Processed Portions (concave portions) and Magnetic Pattern Portions(convex portions) in Magnetic Layer

The measurement and evaluation of the residual amount of a non-magnetic material in the boundary between each of processed portions (concave portions) and each of magnetic pattern portions (convex portions) in a magnetic layer were carried out in a 1 µm-square area. A 0.2 µm-square area was selected in such a manner that the center of the 0.2 µm-square area was located in the boundary between each of the processed portions and each of the magnetic pattern portions in the magnetic layer. Specifically, the 0.2 µm-square area was an area where the amount of the first non-magnetic material was (I(E) + I(UE))/2. Under this condition, the center of the 0.2 µm-square area was determined as the boundary between each of the processed portions and each of the magnetic pattern portions, and then in the 0.2 µm-square area, a 0.1 µm-square area was selected each from the processed portions and magnetic pattern portions in the magnetic layer to obtain I(E)/I(UE). The ratio of I(E) to I(UE) was evaluated on the basis of the following evaluation criteria.

### [Evaluation Criteria]

A: I(E)/I(UE): 5% by mass or more
B: I(E)/I(UE): 2% by mass or more to less than 5% by mass
C: I(E)/I(UE): less than 2% by mass

### «Evaluation of Durability»

In the concave portions, a second non-magnetic material was embedded and the embedded surface was ground, and then an imprint resist composition SU-8-2 (by Kayaku Microchem Co., Ltd.) was applied thereon, and a mold structure with no pattern formed thereon was press-contacted to and delaminated from the imprint resist layer, and then the resist was washed out. Subsequently, an intermediate of the magnetic recording medium was exposed to high temperature and high humidity environment (70°C, 80RH%) for 48 hours to yield a sample.

The surface of the intermediate of the magnetic recording medium was observed by RS-1350 (by Hitachi High-Technologies Corporation) to evaluate the adhesion durability of the second non-magnetic material on the basis of the following evaluation criteria. In the following evaluation criteria, "A" and "B" were in the allowable range.

### [Evaluation Criteria]

A: The number of abnormal points was less than 10 in a disc surface.
B: The number of abnormal points was 10 to 20 in a disc surface.
C: The number of abnormal points was more than 20 in a disc surface.

### «Evaluation of Corrosion Durability»

An intermediate of the magnetic recording medium, in which the protective layer had been deposited and a lubricant had been applied, was exposed to high temperature and high humidity environment (70°C, 80RH%) for 48 hours to yield a sample.

The corrosion durability was evaluated in such a manner that 100 fields were randomly chosen from the surface of the intermediate of the magnetic recording medium, observed by RS-1350 (by Hitachi High-Technologies Corporation) and then evaluated on the basis of the number of defective fields, which was the case where at least one corroded portion was observed in a 5 µm-square field. In the following evaluation criteria, "A" and "B" were in the allowable range.

### [Evaluation Criteria]

A: No abnormal point was found in a disc surface.
B: 1 to 10 abnormal points were found in a disc surface.
C: Abnormal points more than 11 were found in a disc surface.

### Example 2

### <Production of Magnetic Recording Medium>

A magnetic recording medium of Example 2 was produced in the same manner as in Example 1, except that the ion acceleration energy in Example 1 was changed to 200 eV.

### <Evaluation of Magnetic Recording Medium>

The amount of the first non-magnetic material in the produced magnetic recording medium was measured and evaluated in the same manner as in Example 1. The results are shown in Table 1.

### Example 3

### <Production of Magnetic Recording Medium>

A magnetic recording medium of Example 3 was produced in the same manner as in Example 1, except that the ion acceleration energy in Example 1 was changed to 700 eV.

### <Evaluation of Magnetic Recording Medium>

The amount of the first non-magnetic material in the produced magnetic recording medium was measured and evaluated in the same manner as in Example 1. The results are shown in Table 1.

### Example 4

### <Production of Magnetic Recording Medium>

A magnetic recording medium of Example 4 was produced in the same manner as in Example 1, except that the incident angle of ion in Example 1 was changed to 30°.

### <Evaluation of Magnetic Recording Medium>

The amount of the first non-magnetic material in the produced magnetic recording medium was measured and evaluated in the same manner as in Example 1. The results are shown in Table 1.

### Example 5

### <Production of Magnetic Recording Medium>

A magnetic recording medium of Example 5 was produced in the same manner as in Example 1, except that the first non-magnetic material in Example 1 was changed to TiO.

### <Evaluation of Magnetic Recording Medium>

The amount of the first non-magnetic material in the produced magnetic recording medium was measured and evaluated in the same manner as in Example 1. The results are shown in Table 1.

### Example 6

### <Production of Magnetic Recording Medium>

A magnetic recording medium of Example 6 was produced in the same manner as in Example 1, except that the first non-magnetic material was changed to SiO₂.

### <Evaluation of Magnetic Recording Medium>

The amount of the first non-magnetic material in the produced magnetic recording medium was measured and evaluated in the same manner as in Example 1. The results are shown in Table 1.

### Comparative Example 1

### <Production of Magnetic Recording Medium>

A magnetic recording medium of Comparative Example 1 was produced in the same manner as in Example 1, except that the ion acceleration energy and the incident angle in Example 1 were respectively changed to 900 eV and 45°.

### <Evaluation of Magnetic Recording Medium>

The amount of the first non-magnetic material in the produced magnetic recording medium was measured and evaluated in the same manner as in Example 1. The results are shown in Table 1.

**Table 1**

| | Component of first non-magnetic material | Component of second non-magnetic material | First non-magnetic material in processed portions in magnetic layer | | First non-magnetic material in boundary between processed portions and magnetic pattern portions in magnetic layer | | Adhesion durability of second non-magnetic material | | Corrosion durability | |
|---|---|---|---|---|---|---|---|---|---|---|
| | | | Ratio of amount of non-magnetic material of the processed portion to that of the magnetic pattern portion (% by mass) | Evaluation | Ratio of amount of non-magnetic material of the processed portion to that of the magnetic pattern portion in the boundary (% by mass) | Evaluation | The number of abnormal points in a disc surface | Evaluation | The number of abnormal points in a disc surface | Evaluation |
| Ex. 1 | PtO | SiO | 15 | A | 7 | A | 15 | B | 0 | A |
| Ex.2 | PtO | SiO | 30 | A | 12 | A | 9 | A | 0 | A |
| Ex.3 | PtO | SiO | 6 | B | 5 | A | 19 | B | 5 | B |
| Ex.4 | PtO | SiO | 20 | A | 8 | A | 12 | B | 0 | A |
| Ex.5 | TiO | SiO | 25 | A | 4 | B | 8 | A | 7 | B |
| Ex.6 | SiO | SiO | 32 | A | 15 | A | 6 | A | 0 | A |
| Comp. Ex. 1 | PtO | SiO | 4 | C | 1 | C | 36 | C | 14 | C |

As shown in Table 1, the magnetic recording media of Examples 1 to 6, in which the first non-magnetic material more than the predetermined amount remained in the non-magnetic pattern portions, were superior in releasability, and recording and reproducing properties of the magnetic recording medium to the magnetic recording medium of Comparative Example 1, in which the first non-magnetic material less than the predetermined amount remained in the non-magnetic pattern portions. Particularly, it was confirmed that the magnetic recording medium of Example 2, in which the amount ratio (residual ratio) of the first non-magnetic material was 30%, and the magnetic recording medium of Example 6, in which the amount ratio (residual ratio) of the first non-magnetic material was 32%, exhibited remarkable effect of durability.

## Claims

1. A method for producing a magnetic recording medium, comprising:
depositing an imprint resist layer on a magnetic layer which is deposited on a substrate and comprises a ferromagnetic material and a first non-magnetic material,
transferring a concavo-convex pattern onto the imprint resist layer by pressing against the imprint resist layer an imprint mold structure in which a plurality of convex portions are arranged on a disc-shaped base so as to have concavo-convex portions corresponding to the concavo-convex pattern,
forming magnetic pattern portions corresponding to the concavo-convex pattern by etching the magnetic layer using the imprint resist layer as a mask, and
forming non-magnetic pattern portions by embedding a second non-magnetic material in concave portions which are regions other than the magnetic pattern portions formed in the magnetic layer,
wherein the magnetic layer is etched so as to remove the ferromagnetic material contained in the magnetic layer, and leave 5% by mass or more of the first non-magnetic material in each of the concave portions relative to the total mass of the first non-magnetic material contained in each of the regions corresponding to the concave portions to be formed.

2. The method for producing a magnetic recording medium according to Claim 1, wherein the magnetic pattern portions have a granular structure in which crystal particles exhibiting ferromagnetism are defined by the first non-magnetic material.

3. The method for producing a magnetic recording medium according to any one of Claims 1 and 2, wherein the magnetic layer is etched in such a manner that the first non-magnetic material is left in the concave portions so as to be eccentrically located near the magnetic pattern portions.

4. The method for producing a magnetic recording medium according to Claim 3, wherein the amount of the first non-magnetic material left in each of the concave portions is 5% by mass or more relative to the total mass of the first non-magnetic material contained in each of the regions corresponding to the concave portions to be formed.

5. The method for producing a magnetic recording medium according to any one of Claims 1 to 4, wherein each of the first non-magnetic material and the second non-magnetic material comprises any of Pt, Si and Ti.

6. The method for producing a magnetic recording medium according to any one of Claims 1 to 5, wherein each of the first non-magnetic material and the second non-magnetic material comprises an oxide of any of Pt, Si and Ti.

7. A magnetic recording medium produced by the method for producing a magnetic recording medium according to any one of Claims 1 to 6.
